# FASCICULE DE BREVET EUROPEEN

(11) **EP 0 580 197 B1**
(45) Date de publication et mention de la délivrance du brevet: **26.08.1998**
(21) Numéro de dépôt: 93201833.6
(22) Date de dépôt: 24.06.1993
(51) Int. Cl.: A21C 7/00

(54) **Machine pour la mise en boules de la pâte de boulange ou similaire**
Vorrichtung zur Herstellung von Kugeln von Teig oder ähnlichem Werkstoff
Device for making balls of dough or similar material

(30) Priorité: 01.07.1992 IT VI920109
(43) Date de publication de la demande: 26.01.1994
(73) Titulaire: COSTRUZIONI MECCHANICHE SOTTORIVA S.p.A., I-36035 Marano Vicentino (Vicenza) (IT)
(72) Inventeur: Sottoriva, Claudio, 36035 Marano Vicentino (Vicenza) (IT)
(74) Mandataire: Bettello, Pietro, Dott. Ing.

(56) Documents cités:
- EP-A- 0 347 553

## Description

La présente invention a pour objet une machine pour la mise en boules de la pâte de boulange ou similaire.

L'une des différentes opérations qui sont effectuées dans l'industrie de la panification réside dans la division et la mise en boules de la pâte, en vue de la formation de pâtons de forme substantiellement sphérique destinés à être ensuite soumis à la cuisson.

L'opération de division et la phase successive de mise en boules des pâtons sont généralement effectuées de manière automatique à l'aide de machines de type bien connu, qui sont le plus souvent désignées sous les noms de diviseuses et de bouleuses à tambour. Dans ces machines, la pâte est divisée en pâtons de poids uniforme et prédéterminé, qui sont ensuite déposés dans des cavités appropriées ménagées dans la paroi extérieure d'un tambour tournant; après quoi l'action de conformation, qui sera détaillée ci-après, permet auxdits pâtons d'affecter un profil substantiellement sphérique.

Le poste de mise en boules comprend essentiellement trois éléments, à savoir un tambour tournant de forme cylindrique qui comporte sur sa paroi extérieure les cavités sus-indiquées, un tapis transporteur extérieur qui avance à la vitesse périphérique de rotation du tambour afin de contenir et de retenir en position les pâtons, et enfin un cylindre monté à l'intérieur du tambour sus-mentionné.

Les déplacements accomplis par le cylindre à l'intérieur du tambour qui constitue l'élément de base sur lequel prend appui chaque pâton en vue de permettre la conformation de la pâte jusqu'à amener ledit pâton au profil substantiellement sphérique, sont bien typiques. Ces déplacements sont obtenus par combinaison de deux mouvements simultanés, l'un de rotation alternée et l'autre de translation axiale, également de nature alternée. Par l'effet de ces deux mouvements combinés, chaque point de la surface extérieure du cylindre parcourt une trajectoire elliptique. Le mouvement de roto-translation alternatif du cylindre est obtenu par suite du déplacement de son arbre central qui comporte, au niveau de l'une de ses extrémités, un prolongement radial pourvu d'une rotule.

Cette rotule est logée à l'intérieur d'un bloc qui tourne autour d'un axe perpendiculaire à celui du cylindre. La rotation de la rotule autour de cet axe est transmise à l'arbre central dont les mouvements sont liés au déplacement et à la rotation le long de son axe, lequel coïncide avec l'axe de la machine.

Une telle machine est décrite dans EP-A-0347553.

Dans ces conditions, on comprend sans peine que lorsque la rotule aura accompli une rotation complète autour de l'axe perpendiculaire à celui de la machine, le cylindre aura lui-même subi un déplacement alternatif dans le sens longitudinal suivant son axe et, simultanément, aura accompli également une rotation, toujours alternative, d'un certain nombre de dégrés autour de l'axe précité.

En fonction du type de la pâte à travailler ou du poids des pâtons élémentaires à obtenir, il serait avantageux de pouvoir régler les mouvements du cylindre et, plus particulièrement, la trajectoire elliptique des points de sa surface externe, cette trajectoire constituant essentiellement le paramètre qui détermine la mise en boule du pâton.

Le but de la présente invention est de réaliser une machine du type précédemment décrit qui comporte des moyens permettant de modifier la trajectoire des points de la surface extérieure du cylindre. En particulier, cette variation pourra internevir même lorsque la machine est en fonctionnement, ce qui constitue un avantage notable en ce qui concerne la productivité et la simplicité de fonctionnement de l'ensemble.

La machine suivant l'invention est définie à la revendication 1.

En fait la machine est dotée de moyens qui permettent de modifier la distance qui sépare la rotule de l'axe du bloc précité, perpendiculaire à celui du cylindre. Plus particulièrement, ceci est obtenu en faisant en sorte qu'autour du bloc qui incorpore la rotule précitée, soit prévue une roue dentée comique dont l'axe coïncide avec celui du bloc, laquelle roue est susceptible d'être mise en rotation par une autre roue comique calée sur un arbre co-axial à l'arbre central, la première roue conique étant extérieurement solidaire d'une couronne dentée propre à coopérer avec un pignon prévu à l'extrémité d'une tige filetée qui se visse sur la partie du bloc qui est creusée de la cavité dans laquelle est insérée la rotule ; les mouvements de la première roue dentée déterminent ainsi la modification de l'entraxe existant entre la tige au niveau de laquelle est prévue la rotule et l'axe du bloc susmentionné.

Cet agencement permet à lui-seul d'autoriser la variation de l'entraxe sus-mentionné, même lorsque la machine fonctionne normalement.

L'invention comprend en outre, dans l'une de ses revendications secondaires, une forme particulière de réalisation visant essentiellement les moyens propres à assurer la mise en mouvement de la chaîne cinématique sus-indiquée, dans le but d'obtenir la variation de l'entraxe.

L'invention va maintenant être illustrée dans une de ses formes particulières de réalisation, donnée à titre d'exemple non limitatif, avec l'aide des planches de dessin annexées, dans lesquelles :
La fig. 1 est une coupe longitudinale schématique de la machine.
La fig. 2 est une coupe longitudinale montrant à plus grande échelle l'agencement suivant l'invention.
La fig. 3 est une coupe transversale suivant le plan indiqué par la ligne II-II de fig. 1.

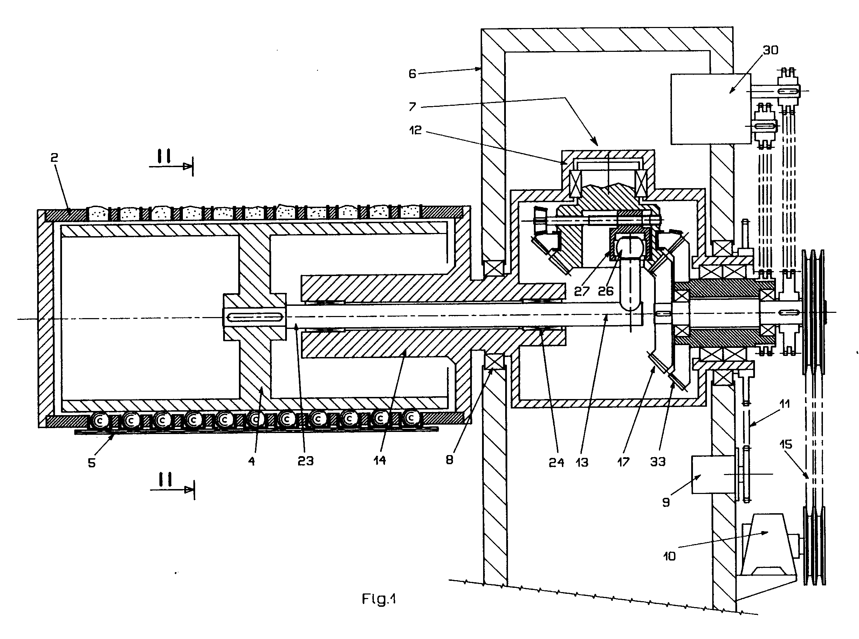

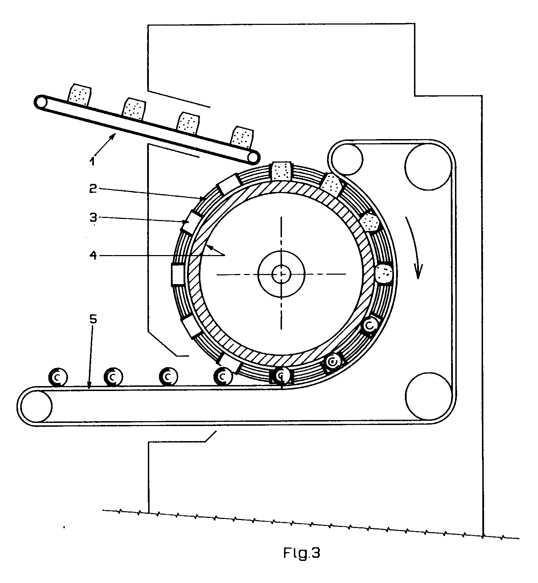

La machine de mise en boules visible en fig. 1 à 3 est essentiellement constituée, à la façon en soi connue, par un poste de transfert 1 qui amène les morceaux de pâtes ou pâtons à travailler, par un tambour 2 dont la paroi latérale comporte des cavités 3 à l'intérieur desquelles viennent s'engager les pâtons présentant un poids déterminé, par un cylindre 4 disposé à l'intérieur dudit tambour 2, et enfin par un tapis sans fin 5 qui s'enroule partiellement sur le tambour 1 et qui fait fonction de transporteur final d'évacuation.

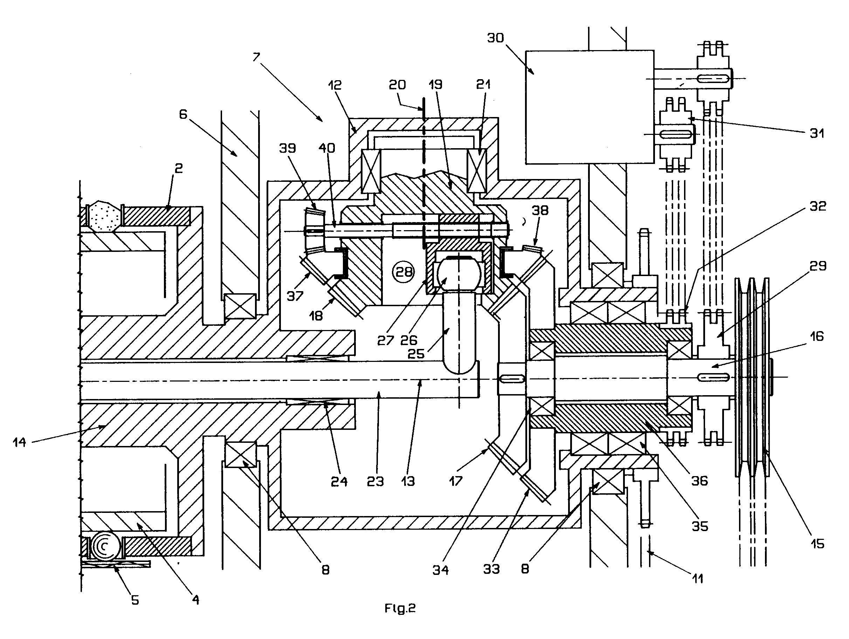

Comme on peut le voir en fig. 1 et 2, à l'intérieur du bâti général 6 de la machine est disposé le groupe 7 qui est destiné à l'entraînement du tambour 2 et du cylindre 4 et qui est monté fou sur des paliers 8 prévus à l'intérieur du bâti précité. La mise en mouvement de la chaîne cinématique renfermée par le groupe 7, ainsi que la rotation de celui-ci, sont obtenues au moyen de deux moteurs électriques 9 et 10 portés par le bâti 6. Le moteur 9 entraîne en rotation par la chaîne 11 le carter extérieur 12 du groupe 7, suivant l'axe longitudinal 13 de la machine. La partie latérale en saillie 14 du carter extérieur 12 est reliée au tambour 2 qui est ainsi mis en rotation autour de l'axe 13.

A travers une transmission par courroie 15, le moteur 10 est propre à mettre en rotation l'arbre de commande 16, lui-même orienté suivant l'axe 13 de la machine ; à l'extrémité de cet arbre 16 est calée une roue dentée conique 17 qui à son tour coopère avec une roue dentée conique 18 ménagée sur la partie inférieure d'un bloc 19, lequel est ainsi entraîné en rotation autour d'un axe 20 perpendiculaire à l'axe longitudinal 13.

Le palier 21 sert d'élément de guidage et de support pour le bloc 19 prévu à l'intérieur du carter 12.

Le cylindre 4 est calé sur l'arbre central 23, lequel se déplace à l'intérieur de la partie en saillie 14 en étant supporté par des paliers 24.

A l'extrémité de l'arbre 23 est fixée une tige 25 pourvue en bout d'une rotule 26. La rotule 26 pénètre à l'intérieur d'un logement 28 ménagé dans le bloc 19, et elle coopère avec un siège 27.

Des explications qui précèdent, on peut voir que le bloc 19 est obligé de tourner aussi bien autour de l'axe 13 qu'autour de l'axe 20. De manière plus précise, la rotation du bloc précité autour de l'axe 20 met en mouvement l'arbre 23, si bien que tous les points de la face extérieure du cylindre 4 accomplissent une trajectoire elliptique, laquelle permet d'exercer une opération efficace sur les pâtons disposés dans les cavités 3.

Toute la construction qui vient d'être décrite correspond à l'état actuel de la technique.

L'originalité de l'invention consiste dans un agencement propre à déterminer le déplacement du siège 27 et, dans ces conditions, à faire varier le rayon de rotation de la rotule 26 autour de l'axe 20, et cela même lorsque la machine est en fonctionnement.

A cet effet, on prévoit que sur l'arbre de commande 16 est calé un pignon 29 propre à transmettre le mouvement à un variateur de vitesse 30 (du type communément appelé différentiel) porté par le bâti de la machine. Le pignon de sortie 31 de ce différentiel 30 met en rotation, par une roue dentée 32, une roue dentée conique 33 qui est montée folle, par l'intermédiaire de paliers 34 sur l'arbre de commande 16. Les paliers 35 permettent de rendre réciproquement indépendantes la rotation du bloc 12 et la rotation du moyeu 36 de la roue dentée 33.

Cette dernière coopère avec une autre roue dentée conique 37 qui est montée folle autour du bloc 19 et qui porte extérieurement une autre couronne dentée 38, laquelle engrène avec un pignon 39. Ce dernier commande la rotation d'une tige fileté 40 qui est vissée dans un bossage du siège 27 qui reçoit la rotule 26.

Lorsque la machine est en fonctionnement, le différentiel 30 met en mouvement la chaîne cinématique de sortie constituée par les roues dentées 31, 32, 33 et 37, de sorte que cette dernière tourne à la même vitesse angulaire que celle qui anime le bloc 19 autour de l'axe 20. Dans ces conditions, le pignon 39 reste donc immobile.

Par contre, lorsqu'il est nécessaire de modifier le rayon de rotation de la rotule 26 autour de l'axe 20, on intervient sur le différentiel 30, qui grâce aux éléments de la chaîne cinématique ci-dessus décrite détermine la rotation du pignon 39 et ainsi le vissage ou dévissage de la tige 10, engendrant le déplacement du siège 27, de la rotule 26, dans un sens ou dans l'autre.

En conséquence on peut finalement constater que la variation de l'entraxe dont il a été question ci-dessus peut être sans autre difficulté effectuée même lorsque la machine est en fonctionnement. Au surplus, ce type de réglage a l'avantage de permettre une variation continue du paramètre envisagé, avec évidemment tous les avantages qui s'ensuivent pour l'utilisateur.

## Revendications

1. Machine pour la mise en boules de la pâte de boulange ou similaire, du type comprenant un tambour tournant (2) dont la paroi latérale comporte des cavités (3) dans lesquelles sont engagés les pâtons à mettre en boules, et un cylindre à paroi extérieure lisse (4) logé à l'intérieur de ce tambour, co-axialement par rapport à lui, pour mettre en contact sa paroi extérieure avec la partie la plus intérieure des pâtons renfermés par les cavités, le cylindre étant calé sur un arbre central (23) qui comporte radialement une tige (25) se terminant par une rotule (26) située à l'intérieur d'un siège (27) lui-même prévu dans un logement (28) ménagé dans un bloc (19) situé dans un carter (12) qui entoure l'arbre central et qui est solidaire du tambour tournant (2), le bloc précité étant en outre susceptible d'être entraîné en rotation autour d'un axe (20) perpendiculaire à l'axe central (13) de la machine et décalé par rapport à l'axe de la tige alors que cette dernière tourne suivant l'axe central de la machine, en faisant en sorte que l'arbre central (23), et en conséquence le cylindre, est propre à se déplacer axialement à la suite de ses mouvements de rotation autour de son axe propre, caractérisée par le fait qu'elle comporte des moyens propres à permettre la modification de la trajectoire suivie par les points de la surface externe du cylindre (4).

2. Machine suivant la revendication 1, caractérisée en ce qu'elle comporte des moyens propres à permettre la modification de la distance séparant l'axe de la tige (25) et l'axe (20) autour duquel tourne le bloc (19).

3. Machine suivant la revendication 2, caractérisée en ce que les moyens pour la modification de la trajectoire suivie par les points de la surface extérieure du cylindre (4) sont agencés pour que ladite modification puisse intervenir même lorsque la machine est en fonctionnement.

4. Machine suivant la revendication 3, caractérisée en ce qu'autour du bloc (19) est prévue une première roue dentée conique (37) dont l'axe coïncide avec celui du bloc et qui est susceptible d'être mise en rotation par une seconde roue conique (33) montée sur un arbre de commande (16) co-axial à l'arbre central (23), la première roue (36) comportant extérieurement une couronne dentée (38) propre à coopérer avec un pignon (39) pourvu à l'une de ses extrémités d'une tige filetée (40) qui est vissée dans le siège (27) du bloc dans lequel est ménagée le logement (28) qui reçoit la rotule (26), les mouvements de la première roue (37) provoquant la variation de l'entraxe existant entre l'axe de la tige (25) et l'axe du bloc (19).

5. Machine suivant la revendication 4, caractérisée en ce que la première roue dentée conique (36) est mise en rotation par un variateur de vitesse de type différentiel (30) porté par la bâti de la machine.

## Claims

1. Machine for making baker's dough or similar into balls, of the type comprising a rotating drum (2) whose side wall includes cavities (3) in which the lumps of dough that are to be made into balls are fitted, and a cylinder with a smooth external wall (4) accommodated inside said drum, coaxially with respect thereto, so as to bring its external wall into contact with the innermost portion of the lumps of dough contained by the cavities, the cylinder being wedged on a central shaft (23) which radially features a rod (25) terminating in a ball-and-socket (26) situated inside a seat (27) which itself is provided in a coupling (28) incorporated in a block (19) situated in a housing (12) which surrounds the central shaft and which is rigidly joined to the rotating drum (2), the aforesaid block being furthermore adapted to be driven in rotation about an axis (20) perpendicular to the central axis (13) of the machine and offset with respect to the axis of the rod whilst the latter rotates about the central axis of the machine, thereby rendering the central shaft (23) and consequently the cylinder capable of moving axially following the rotational movements thereof about its own axis, characterised by the fact that the machine includes means suitable for making it possible to alter the trajectory followed by the points of the external surface of the cylinder (4).

2. Machine according to claim 1, characterised in that it includes means suitable for making it possible to alter the distance separating the axis of the rod (25) and the axis (20) about which the block (19) rotates.

3. Machine according to claim 2, characterised in that the means for altering the trajectory followed by the points of the external surface of the cylinder (4) are arranged in such a way that said alteration can take place even when the machine is in operation.

4. Machine according to claim 3, characterised in that there is provided around the block (19) a first conical toothed wheel (37) whose axis coincides with that of the block and which is adapted to be set in rotation by a second conical wheel (33) mounted on a control shaft (16) coaxial with the central shaft (23), the first wheel (36) having externally an annular gear (38) adapted to cooperate with a pinion (39) provided at one of its ends with a threaded rod (40) which is screwed into the seat (27) of the block incorporating the coupling (28) which receives the ball-and-socket (26), the movements of the first wheel (37) bringing about the variation of the centre distance existing between the axis of the rod (25) and the axis of the block (19).

5. Machine according to claim 4, characterised in that the first conical toothed wheel (36) is set in rotation by a differential-type variable speed drive (30) supported by the machine frame.

## Patentansprüche

1. Maschine zur Herstellung von Kugeln aus Backteig oder ähnlichem Material, enthaltend eine sich drehende Trommel (2), deren Wand Ausnehmungen (3) besitzt, in denen sich Teigwürste befinden, die zu Kugeln verarbeitet werden sollen, und einen Zylinder (4) mit glatter Außenwand, der im Inneren der Trommel angeordnet ist, und zwar koaxial in bezug auf diese, um seine Außenwand mit dem innersten Teil der in die Ausnehmungen eingeschlossenen Teigwürste in Kontakt zu bringen, wobei der Zylinder mit einer zentralen Welle (23) fest verkeilt ist, die eine radial abragende Stange (25) aufweist, welche in einem Kugelgelenk (26) endet, das sich im Inneren eines Sitzes (27) befindet, der seinerseits in einem Lager (28) angeordnet ist, das sich in einem Block (19) befindet, der in einem Gehäuse (12) untergebracht ist, das die zentrale Welle umgibt und das mit der sich drehenden Trommel (2) fest verbunden ist, wobei der genannte Block (19) außerdem um eine Achse (20) in Drehung versetzt werden kann, die senkrecht zur Mittelachse (13) der Maschine angeordnet und versetzt ist in bezug auf die Achse der Stange, wobei letztere sich mit der Mittelachse der Maschine dreht, wodurch die zentrale Welle (23), und damit der Zylinder, axial verschoben werden als Folge dieser Drehbewegungen um ihre eigene Achse, dadurch gekennzeichnet, daß die Maschine Mittel enthält, die die Änderung der Umlaufbahn gestatten, der die Punkte der Außenfläche des Zylinders (4) folgen.

2. Maschine nach Anspruch 1, dadurch gekennzeichnet, daß sie Mittel enthält, die die Änderung des Abstandes zwischen der Achse der Stange (25) und der Achse (20) gestatten, um die herum sich der Block (19) dreht.

3. Maschine nach Anspruch 2, dadurch gekennzeichnet, daß die Mittel zur Änderung der Umlaufbahn, der die Punkte der Außenfläche des Zylinders (4) folgen, so angeordnet sind, daß die Änderung auch vorgenommen werden kann, wenn sich die Maschine in Betrieb befindet.

4. Maschine nach Anspruch 3, dadurch gekennzeichnet, daß um den Block (19) herum ein erstes Kegelzahnrad (37) angeordnet ist, dessen Achse mit derjenigen des Blockes zusammenfällt und das durch ein zweites Kegelrad (33) in Drehung versetzt werden kann, das auf einer Antriebswelle (16) montiert ist, die koaxial zur zentralen Welle (23) angeordnet ist, wobei das erste Rad (37) an seiner Außenfläche einen Zahnkranz (38) besitzt, der mit einem Ritzel (39) zusammenwirkt, das an einem seiner Enden mit einer Gewindestange (40) ausgerüstet ist, die in den Sitz (27) des Blockes eingeschraubt ist, in dem das Lager (28) untergebracht ist, das das Kugelgelenk (26) aufnimmt, wobei die Bewegungen des ersten Rades (37) die Änderung des Achsabstandes zwischen der Achse der Stange (25) und der Achse des Blockes (19) bewirken.

5. Maschine nach Anspruch 4, dadurch gekennzeichnet, daß das erste Kegelzahnrad (36) durch einen vom Maschinenrahmen getragenen Regelantrieb vom Differential-Typ (30) in Drehung versetzt wird.
